(19)

**Europäisches Patentamt**
**European Patent Office**
**Office européen des brevets**

(11) **EP 3 468 164 A1**

(12) **EUROPEAN PATENT APPLICATION**

(43) Date of publication:
**10.04.2019 Bulletin 2019/15**

(21) Application number: **17195094.2**

(22) Date of filing: **06.10.2017**

(51) Int Cl.:
*H04N 1/32* (2006.01)  *H04N 21/2343* (2011.01)
*H04N 21/643* (2011.01)  *H04N 21/8358* (2011.01)
*G06F 21/16* (2013.01)  *H04N 21/254* (2011.01)
*H04N 21/258* (2011.01)  *H04N 21/4627* (2011.01)
*H04N 7/167* (2011.01)  *H04N 21/2389* (2011.01)
*H04N 21/4405* (2011.01)  *H04N 21/4408* (2011.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Nagravision S.A.**
**1033 Cheseaux-sur-Lausanne (CH)**

(72) Inventor: **BIEBER, Yann**
**1004 Lausanne (CH)**

(74) Representative: **Ipside**
**6, Impasse Michel Labrousse**
**31100 Toulouse (FR)**

(54) **A METHOD FOR DELIVERING DIGITAL CONTENT TO AT LEAST ONE CLIENT DEVICE**

(57) The present disclosure provides a watermarking scheme for providing traceability of leaked or otherwise illegally re-distributed over-the-top streaming content. The watermarking scheme is a two-step scheme wherein the content is pre-marked server side by providing part of the content, encrypted under a global key, and a first set of complementary parts of the content comprising a first mark and encrypted under a set of first keys, and a second set of complementary parts of the content comprising a second mark and encrypted under a set of second keys. A marked encrypted content is then made available to a client device by providing a particular combination of the parts of the content encrypted under the global key, parts of the content having a first mark, encrypted under the set of first keys, and parts of the content having a second mark, encrypted under the second set of keys, the particular combination being based on an identifier associated with a client device. A trans-scrambling code is generated server-side, describing the decryption of the parts of the content encrypted under the global key, trans-scrambled under a session key and the decryption of the parts of the content having first and second marks, decrypted by their respective keys and trans-scrambled under the session key. The trans-scrambling code and the session key are provided to the client device, thus enabling the client device to decrypt the watermarked content to provide a marked decrypted content, traceable to the client device.

SERVER SIDE ← → CLIENT SIDE

**Figure 1**

**Description**

**TECHNICAL DOMAIN**

The present disclosure relates generally to the domain of Pay TV and more particularly to security concerns related to Over-the-Top (OTT) streaming of paying content to a plurality of users.

**BACKGROUND**

Conditional access systems (CAS) exist for preventing unauthorised clients from accessing digital content for which they have not been granted the necessary rights. Such systems are known in the broadcast domain. Digital rights management systems (DRM) are also known for preventing unauthorised access to content.

Watermarking of digital content is a known method for allowing for content which has been illegally redistributed to be traced to a user or a device for which access was authorised, thus implying that the user or device was involved in said illegal redistribution. Such users or devices may then have their rights revoked or other punitive actions may be taken against those users or devices as necessary.

Watermarking of video on demand content (VOD) is fairly straightforward as it can be watermarked offline at the content server using an identifier provided by the requestor of the content and delivered to the requestor once the watermark has been inserted. On the other hand, watermarking of live streaming content, for example live OTT streaming of content to a plurality of clients, presents some additional problems. Streaming content is usually stored in a content delivery network (CDN), as a plurality of representations each comprising a number of chunks of the content. If the OTT streaming content were to be marked server-side, then a large capacity CDN would therefore become necessary as all the representations would require to be watermarked for many different clients. Furthermore, the chunk selection process would become complicated for a large number of clients all requesting different chunks at the same time. Depending on the different business models of various different participants in the domain offering solutions to OTT live streaming, it may not even be possible for a particular participant to address the problem by acting on the server-side if the business model excludes any server-side activity for example. Even for players who can act at the server-side, the solution may be prohibitively expensive. Furthermore, certain solutions may not provide for sufficiently low detection times for decoding watermarks from recovered illegally redistributed content.

Another alternative for addressing the problems associated with watermarking of OTT streaming content is to apply the watermarking at the client-side. However, such enforcement would only be feasible on certain devices which are pre-configured to enforce DRM rules. This may exclude a large number of client devices or device types. Furthermore, even for devices which are configured to enforce DRM rules, this solution relies on a pre-condition that the client device be a trusted device, which is not always the case. It can be said that there is no real relation between DRM and watermarking: in client-side marking it might be easy for an attacker to block the application of the watermark in the device, leading to a problem in that the level of robustness which is possible in client-side marking applications is rather low.

In view of the prior art in the domain, there is a need to address problems of lack of robustness, portability and scalability in a solution addressed at providing secure OTT streaming of premium content, especially in the case of live content delivery.

**BRIEF DESCRIPTION OF THE DRAWINGS**

The present disclosure described herein will be better understood thanks to the detailed description which follows and the accompanying drawings, which are given as non-limiting examples of embodiments of the disclosure, wherein:

   figure 1 shows an environment in which an embodiment described herein may be deployed;
   figure 2 illustrates a content watermarking scheme which may be employed in an embodiment described herein;
   figure 3 illustrates an example of content being watermarked client device associated with an identifying parameter of 0110 according to an embodiment disclosed herein; and
   figure 4 shows a system in which an embodiment disclosed herein may be deployed.

**DETAILED DESCRIPTION**

As mentioned above, known methods for watermarking content have drawbacks when such content is to be streamed to a large number of client devices whose trustworthiness cannot be guaranteed. Server-side watermarking methods would be difficult to scale and would in any case imply modifications to the content delivery network (CDN). It is difficult to scale to millions of simultaneous viewers without substantial modification to the CDN. Since different suppliers/operators may own different functions making up the complete streaming system, it may not be possible to modify the CDN. On the other hand, state of the art client-side watermarking methods require that the clients be trusted devices. The present disclosure deals with methods for achieving watermarking of content for over-the-top (OTT) delivery without requiring any modifications to the CDN and which provide security for premium content for any client device, including so-called non-trusted devices. Examples of non-trusted devices as referred to herein include personal computers, browser applications, telephones, tablets, set-top boxes, connected televisions, etc.

According to a first aspect, the present disclosure provides for a watermarking scheme for providing traceability of leaked or otherwise illegally re-distributed content, the scheme being suitable for securely watermarking over-the-top premium streaming content. In this watermarking scheme the content is broken up and marked on the server side to produce two different complete streams, both encrypted. The encryption of the two streams is ensured through the use of 2*N encryption keys: N keys for one stream and N keys for the other stream. The server is configured to deliver a subset of N keys selected from among the 2*N keys to a client. The delivered keys are protected under a digital rights management scheme DRM. The client is configured to receive, from the server, only the parts of the content which have been encrypted under the keys which have been delivered to the client. In this manner, it may be arranged for each client to receive a different set of keys, therefore receiving different parts of the content. Preferably, the selection of keys for the client depends on an identifying parameter of the client such as a unique identifier. Consequently, the content can always be traced back to the client to which it was delivered. Further aspects, described below, allow for the optimisation of the storage of the content on the CDN in terms of the required storage size. These further aspects involve the use of variants of the content.

According to another aspect, the watermarking scheme is a two-phase scheme wherein the content is first broken up and pre-marked server side. This first phase includes providing part of the content, encrypted under a global key, and a first set of complementary parts of the content comprising a first mark and encrypted under a set of first keys, and a second set of complementary parts of the content comprising a second mark and encrypted under a set of second keys. A marked encrypted content is then made available to a client device for the second phase of current consumption. The second phase includes providing a particular combination of the parts of the content encrypted under the global key, parts of the content having a first mark, encrypted under the set of first keys, and parts of the content having a second mark, encrypted under the set of second keys, the particular combination being based on an identifier associated with the client device. A trans-scrambling code is generated server-side, describing the decryption of the parts of the content encrypted under the global key, trans-scrambled under a session key and the decryption of the parts of the content having first and second marks, decrypted by their respective keys and trans-scrambled under the session key. The trans-scrambling code and the session key are provided to the client device, thus enabling the client device to decrypt the watermarked content to provide a marked decrypted content for rendering, this content being traceable to the client device.

During the content consumption phase, the client device, running an identifiable consumption session, receives: a part of the content encrypted under a global key; a selection of parts of at least two different variants of the content, each of such parts being encrypted under different variant keys; a session key associated with the consumption session; and a trans-scrambling code also associated with the session, the trans-scrambling code allowing for the received encrypted content and variants to be decrypted using the session key. The selection of the parts is based on an identifier of the identifiable consumption session. Provision for such selection may be made by hardware or a combination of hardware and software entirely at the client-side. This avoids any need to provide a server in charge of selecting parts for the client, which would lead to scalability problems. Since the rendering of the content is done by combining the decrypted content and variants, the content can then be said to be watermarked in that it can be traced to the identifiable consumption session and therefore to the client device which initiated the consumption session for receiving and rendering the content.

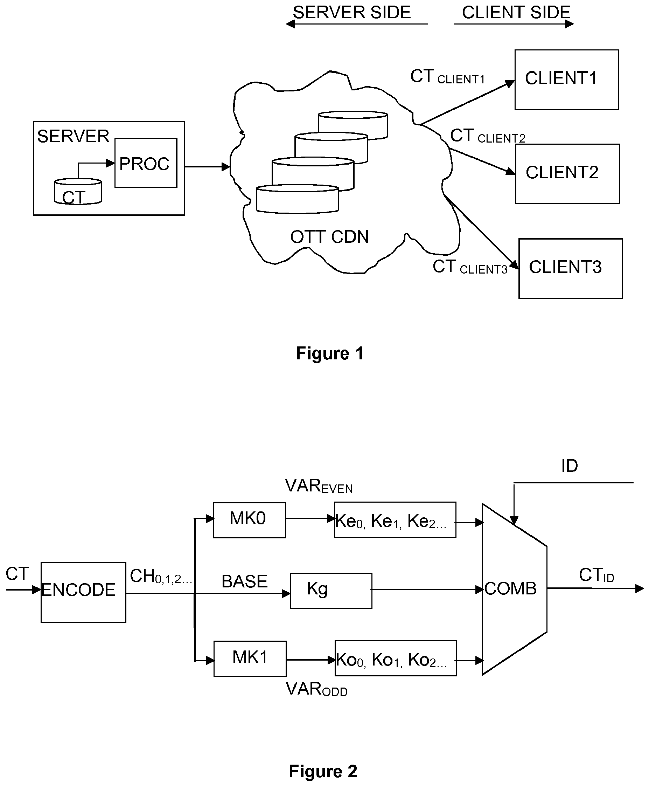

Figure 1 shows a schematic diagram of an environment in which watermarking according to embodiments described herein may be performed. Server-side, there is provided a content server (SERVER) for preparing (PROC) content (CT) and making the prepared content available on a content delivery network (OTT CDN). Client-side, any from a plurality of client devices (CLIENT1, CLIENT2, CLIENT3,...) may request a particular content and receive an encrypted version of the content, marked in a particular way for the particular client which made the request (CT $_{CLIENT1}$, CT $_{CLIENT2}$, CT $_{CLIENT3}$,...). The content is therefore prepared once by the content server for all potential clients and placed on the CDN. Each client will then pull a particular subset of the content from the CDN, the particular subset depending on an identifier of the client device. It is convenient to use that identifier as the watermark since it provides for easy tracking.

A system in which an embodiment disclosed herein may be deployed may include a content server for providing live over-the-top (OTT) content streaming delivery, a content delivery network (CDN), a digital rights management (DRM) server and a session management server, all of which may or not be part of the content server, and one or more client devices to receive and render the requested content. An embodiment disclosed herein is particularly suited to systems configured to stream media file formats which are compatible with the ISO Base Media File Format (ISOBMFF), a format which is designed to contain timed media information for a presentation in a flexible, extensible format that facilitates interchange, management, editing, and presentation of the media, especially where provision is made for the carriage of Sample Variants. A Sample Variant is an assembled media sample replacing an original sample. MPEG-4 is an example of an ISOBMFF in which provision is made for the carriage of Sample Variants. Sample Variants are typically used to provide forensic information in the rendered sample data, useful for identifying the DRM client or any other hardware element in the client device for example. The client device may execute an application for requesting the content and the request may open session, identifiable via a session-identifier (sessionID) and traceable back to the client device.

According to an embodiment, the first phase of the two-phase watermarking method is a phase of content preparation. Content preparation includes stages of segmentation, pre-marking and analysis, all of which may be performed on the server side on the clear content in its compressed form, for example a clear MPEG video stream. Pre-marking may be achieved by decoding, modifying and re-encoding the stream. Other embodiments are possible, where the pre-marking is performed on raw content or content that has not been encoded. However, in a preferred embodiment the pre-marking is done on the compressed content, encoded. Consequently, on the client device side, there is a corresponding step of decoding in order to decompress the content before rendering.

During the content preparation phase, a number of different types of chunks of the content, or samples, are prepared and provided to the CDN. The goal is for the client device to receive a particular combination of different chunks, such combination being traceable to that particular client device. A sample may be a base sample, i.e. original sample of the content, or it may be a variant of the original sample, i.e. a sample variant. The ISOBMFF may include a plurality of different sample variants. The content preparation phase further includes a stage wherein encryption of this clear, compressed content is performed, during which the base samples and the various different sample variants are all encrypted under different keys. Content preparation is illustrated in figure 2.

According to an embodiment, during the preparation phase, a segmentation step is provided: the content is segmented, e.g. broken up into base samples and two or more different sets of sample variants.. In the case where there are two different sets of sample variants, the sample variants may be referred to as an odd variant and an even variant. Each of the variants is a differently marked version of the base content. During content preparation the even variant's samples may be marked with a 0 and the odd variant's samples may be marked with a 1. This is an example of what was described as pre-marking. The thus pre-marked variants may then be stored, along with the base samples, all in encrypted form, as described more in detail below in the specification, for delivery to the client devices. Preferably, this storage is done on a content delivery network CDN, which may or may not be part of the content server. Where there are more than two different sets of sample variants, it can be said that there are N variants. For example, for N variants, there would be N different sets of sample variants.

According to a particular embodiment, instead of storing the whole of the variants, it is convenient to calculate the difference between the samples of the even variant and the base samples and to simply store the difference as the even variant. Similarly, to create the odd variant, only the delta between the variant and the base is stored. This allows to take advantage of the fact that the variants may be very similar to the base samples, sometimes differing just by the mark, which could be just a 1 or a 0. Advantageously, this arrangement of base samples plus variant allows for the amount of storage space thus required on the CDN to be greatly reduced, Storing only the delta provides another advantage in that neither of the sample variants should be playable on its own. The sample variants need to be used in combination with their respective base samples. According to another embodiment, during segmentation, the base content is broken up by removing certain parts and including them in the variants in order that playback of the base content on its own is not possible: instead it is necessary to have both the base content and appropriate parts of the variant or variants in order to get a properly decodable stream for rendering.

During the encryption, the samples of the base content are encrypted under a global key ($Kg$), the $i$ different samples of the even variant are encrypted under $i$ different even variant keys ($Kve_i$), and the $i$ different samples of the odd variant are encrypted under $i$ different odd variant keys ($Kvo_i$), where $i$ is the number of bits of the identifier allowing for the client requesting the content to be traced. The encrypted content samples, including the base, even and odd encrypted samples, are stored on the CDN along with a corresponding global manifest referencing the available samples, or chunks, and their bitrates which are used in a particular content. Each particular content may be identifiable by a content identifier (contentID). According to an embodiment, the keys themselves could be 128 bits long. It is to be understood that $i$, the number of bits allowing for the client requesting the content to be traced, can be expressed as being the number of bits required to be able to reliably code the identifier. For example, with code correction error in use, the identifier could be 32 bits long but $i$ would need to be 56 bits in length.

The second phase is the content consumption phase, wherein the client device gets samples of content from the CDN. A particular client will usually receive the encrypted base samples and a particular sequence, or selection, of encrypted sample variants which are to be combined to provide the content, playable once decrypted and combined. The selection is preferably driven by a parameter which serves to identify the client, thereby ensuring that the content will be traceable to the client. This is also illustrated in figure 2. In state of the art ISOBMFF systems, the client also receives the necessary unique sequence of keys for decrypting the content and variants. However, in embodiments disclosed herein, the client device does not receive these keys directly. Consequently, these embodiments are suitable for ensuring security even in non-trusted client devices. According to embodiments described herein, instead of receiving the necessary unique sequence of keys for decrypting the content and variants, the client device receives a trans-scrambling code and a session key. The session key may be traceable to the client device. Using the trans-scrambling code and the session key, the client device can then arrive directly at the decrypted content, marked as intended. By preventing the client device from directly receiving any of the keys which were used to encrypt the content for the marking process, this ensures that the client device cannot use a false combination of the keys to mark the decrypted content in any other way than the way it was intended for that client device.

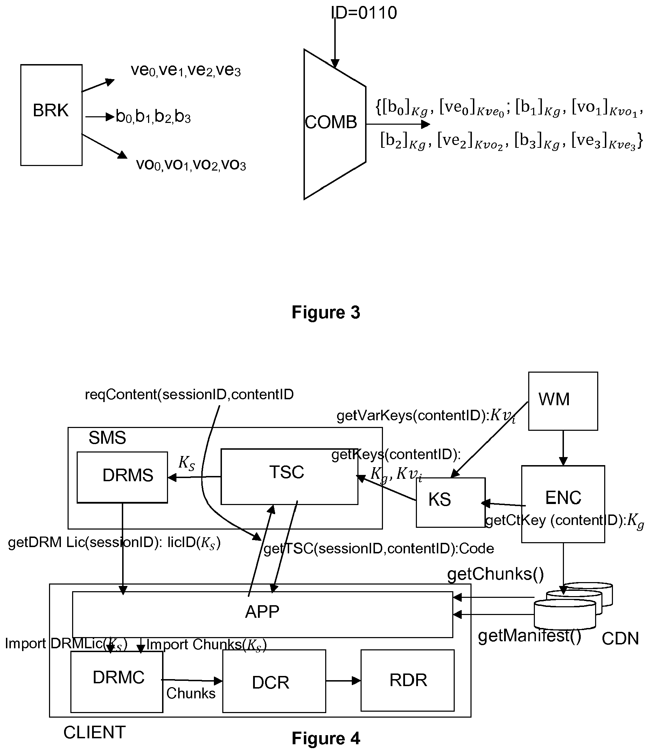

Figure 3 illustrates how a particular combination of parts of encrypted base samples and different encrypted sample variants of a content requested by a client device may be made available to the client device based on an identifying parameter associated with the client device. A key server may be used to manage the release of the different keys required such that the actual combination of base samples and sample variants made available for the client device would allow for the selected, identified, content to be properly decrypted and rendered. This amounts to exercising control over if and how the sample variants are combined with the base samples and further processed during the content consumption phase. However, according to embodiments described herein, the keys are not provided to the client device. Instead, the keys are provided to a session management server, which is remote from the client device. In one embodiment the session management server is part of the content server. In another embodiment the session management sever is outside of the content server. In practice, when the client requests a trans-scrambling code, it receives, in addition to the requested code, a list of key identifiers that it can trans-scramble. Based on this information, the client can select the information that it has to download from the server. This avoids the client downloading information which it would not be able to process.

The identifying parameter mentioned above, traceable to the client device, may be a unique identifying parameter associated with a hardware element of the client or it may be a session identifier attributed for example by the session management server such that the session identifier can uniquely identify the client who used that session to receive the content. For example, for a client associated with identifier 0110, the content may be constructed using the base samples and the following sequence of variants: even, odd, odd, even. In practice however, the identifier is usually very much longer than this 4-bit example. The client will therefore be associated with the following unique set of base samples, variants and keys: base samples $\{sb_0,sb_1,sb_2,sb_3,\}$, variants $\{ve_0,vo_1,vo_2,ve_3\}$, and keys $\{Kve_0,Kvo_1,Kvo_2,Kve_3\}$. According to an embodiment, the base samples are encrypted under $Kg$, and each of the $i^{th}$ sample variants are encrypted under the respective $i^{th}$ even or odd encryption key. This is illustrated in figure 3. To play the content, the client must decrypt the base samples using $Kg$ and decrypt the respective sample variant using the corresponding even or odd encryption key ($Kve_i$, $Kvo_i$), then combine the base samples and variants together.

Embodiments disclosed herein advantageously provide for sufficient security in live OTT streaming of premium content even when the client (CLIENT) is not a trusted client. A trusted client is one which would be guaranteed to use the correct combination of odd and even samples and their corresponding keys to create a uniquely marked version, or copy, of the content simply by following the agreed procedure. Such a client may therefore receive all of the necessary keys $Kg$ and $Kve_i$ or $Kvo_i$ to decrypt its content. A non-trusted client however cannot guarantee this and so the necessary keys $Kg$ and $Kve_i/Kvo_i$ to decrypt the content are withheld from the client device. According to an embodiment, $Kg$ and $Kve_i/Kvo_i$ are not directly sent to the client. Instead, a trans-scrambling scheme is employed, whereby the encrypted content is trans-scrambled from the $Kg$ and $Kve_i/Kvo_i$ scheme to a new scheme associated with the client device, encrypted under a session key $Ks$. The session key corresponds to the particular session (sessionID) that is attributed to a particular client (CLIENT) who requests the content and therefore an identifier of the session may be used to identify the intended recipient. The client device for whom the content is watermarked is therefore traceable.

A system in which an embodiment may be deployed is illustrated in figure 4. The content server prepares the content as described above and makes the content available to the client devices on the content delivery network (CDN). The client device (CLIENT) requests a particular content (contentID) from the content server. This request may be initiated by an application (APP) on the client device, received by a session management server (SMS), remote from the client device, which opens an identifiable session (sessionID) associated with the particular client device. The client device may be identified by a unique ID, preferably securely stored in the client device. In other embodiments it is not the device itself which is identifiable but a process: for example, on a web browser it is the session identifier which is important to use for tracing rather than an identifier of the computer on which the browser is running. The session management server (SMS) may be part of the content server. In another embodiment, the session management server (SMS) may be part of the content delivery network (CDN), although this would be rather disadvantageous from a scaling point of view. An identifier of the session (sessionID) may be used as the parameter for selecting the particular combination of base samples and sample variants the client device is to receive to make up the encrypted content. Using the session identifier (sessionID), a key server (KS), which may also be part of the content server, identifies the decryption keys $Kg$ and $Kve_i/Kvo_i$ necessary for decrypting the combination of base samples and sample variants for the client. As mentioned above, instead of delivering the keys $Kg$ and $Kve_i/Kvo_i$ necessary for decrypting the content to the client device, a session key *Ks* is generated and a trans-scrambling code (Code) is generated (TSC) to describe how to get decrypted content using the session key *Ks* instead of the *Kg* and *Kve$_i$/ Kvo$_i$* keys.

Trans-scrambling is employed for content encrypted under a first key and decrypts the encrypted content using the first key and re-encrypts the decrypted content under a second key. This is trans-scrambling from the first key domain to the second key domain. The content can be discovered in the clear either by decrypting the encrypted content using the first key (first domain) or by decrypting the re-encrypted content using the second key (second domain). Embodiments described herein take advantage of trans-scrambling in order to keep secret the *Kg* and *Kve$_i$/Kvo$_i$* keys from the client device. As shown in figure 4, an embodiment uses a trans-scrambling code generator TSC to generate the trans-scrambling code Code. In this embodiment, the trans-scrambling code generator TSC is in the session management server SMS. This is a trusted element, remote from the client device. This element can therefore be trusted to receive the necessary keys corresponding to the particular session used by the client device and to generate a code Code which, when executed, provides the result of a process of decrypting the encrypted content using the proper combination of *Kg* and *Kve$_i$/ Kvo$_i$*, generating a session key *Ks* and re-encrypting the decrypted content under the session key *Ks*. The session key and the trans-scrambling code are then provided to the client device. The client device can then execute the trans-scrambling code on the content from the CDN (encrypted under *Kg* and the particular combination of *Kve$_i$/ Kvo$_i$*) and use the session key to decrypt the result, thereby providing the content in the clear, which may then be assembled and rendered.

Figure 4 also shows various other hardware blocks which may be used within a system for delivering watermarked content to at least one client device. Not shown, is an encoder for encoding content into a convenient format such as MPEG for example. According to different embodiments, the encoding step is optional; however the use of the encoding step is preferable as optimal encoding protocols reduce the overall amount of data that has to be transferred over a network towards the client devices. A watermark variant creation module WM is illustrated, for creating the base samples and the at least two sample variants. According to a particular embodiment, two sample variants are created: an even variant, marked with 0, and an odd variant, marked with 1. Other marking schemes are possible: for example, for the even variant, the mark may be a 0 or a series of zeros or a more complex sequence, in at least one part of the sample to be marked; for the odd variant, the mark may be a 1 or a series of 1 s or a more complex sequence, different from the even mark, in at least one part of the sample to be marked.

When a client makes a request for a particular content, it preferably sends a content identifier contentID to the CDN, the contentID uniquely identifying the requested content. The client CLIENT may run an application APP to perform such content requests. The application starts a playback session, having a session identifier sessionID and requests the content. In return the application receives the global manifest getManifest() describing which chunks make up the encrypted ENC content and the content itself getChunks() from the CDN. The content is received as a sequence of base samples and odd and/or even sample variants according to an identifier, for example the sessionID.

Thus, the embodiments described herein provide the advantage that any scaling to provide for the live OTT streaming thereby offered, need only be performed at the session management level, in particular the DRM server DRMS and the trans-scrambling code generator TSC. This is convenient especially where the content delivery network is owned by a third party, meaning that scaling could not be performed at this level. Furthermore, thanks to the trans-scrambling provided according to the disclosure, any client can be used because security is preserved regardless of whether the client is a trusted client or not. The content server has access to a key server KS. According to an embodiment the key server may be part of the content server. The key server receives all of the variant keys and the global keys for the different contents to be made available by the CDN. Depending on the contentID and the sessionID, the key server sends the global keys for the requested content to the session management server and the variant keys for that content and that sessionID. The session manager generates a session key for the particular session and generates a trans-scrambling code which will allow the client device to decrypt the encrypted content using the session key instead of the global key and variant keys.

In a method according to an embodiment, an application APP executed by the client device initiates a playback session and gets a global manifest and content from the CDN. To be able to decrypt the content, the application requests the trans-scrambling code from the session management server. A DRM license server in the session management server is preferably used to provide *Ks* to the client device in a license via the client's DRM client DRMC.

As mentioned above, a trans-scrambling code may be described as a set of instructions which when performed on the base samples encrypted under the global key and on the particular selection of corresponding sample variants encrypted under their respective variant keys, provides values equal to those base samples and sample variants encrypted under a session key. Practically speaking, according to an embodiment, an application using the trans-scrambling may be provided to be in charge of: trans-scrambling the content; and merging the variant samples and the base samples to create the chunks which will be decrypted by the client device using the session key. The operations performed by the application are done so in the encrypted domain. Trans-scrambling can therefore be said to be equivalent to decrypting the encrypted base samples and sample variants (first domain) with their respective global key and variant keys and re-encrypting the results under the session key (second domain). The trans-scrambling code describes how to go from the first domain to the second domain. Consequently, the encrypted base samples and sample variants may be decrypted using the session key and the trans-scrambling code. Hence, the client device is able to discover the base samples and the sample variants without having to know the values of the keys which were actually used to encrypt them, thereby maintaining security and maintaining the traceability of the content to the particular session and therefore to the client device.

The application is used to import the chunks of content from the CDN (encrypted base samples and sample variants) making up the watermarked content and to apply the trans-scrambling code on the content downloaded from the CDN, decrypt the result using the session key, combine the base samples and variants and render the watermarked content.

In the generic case, the trans-scrambling code describes decrypting an encrypted content using the necessary $Kg$ and N $Kve_i/Kvo_i$ keys then re-encrypting the decrypted content using the session key $Ks$. In order to keep this process secure and avoid exposing the clear content while doing that, White-box cryptography should be used. This needs to happen on the base samples encrypted under $Kg$ and on the N $Kve_i/Kvo_i$ keys needed to include the unique watermark into the content, based on the N-bit identifier.

According to a preferred embodiment, the cryptographic functions are performed according to the counter mode of the advanced encryption standard AES CTR. The counter mode CTR of the advanced encryption standard AES is a particularly efficient block cipher mode which provides sufficient levels of security. To encrypt using CTR-mode encryption, one starts with a plaintext, the encryption key and a counter value Ctr. The ciphertext, i.e. encrypted value, is then the exclusive-OR of the AES encryption using the key of an initialisation vector (IV) plus the counter value and the plaintext. Similarly, to decrypt, the plaintext is the exclusive-OR of the AES encryption using the key of the initialisation vector plus the counter value and the ciphertext. Thanks to the associative and commutative properties of the XOR operation used in AES CTR, the trans-scrambling code can be readily generated, thus allowing the client device to securely decrypt the content just using simple XOR function using the key, i.e. (session key, initialisation vectors and counter values.

For example: performing a decryption, using Kg, in AES CTR mode to get the plaintext amounts to performing an XOR as follows:

$$XOR(AES(IV+Ctr)\,Kg, \text{ ciphertext}).$$

Encrypting the plaintext with $Ks$ amounts to performing an XOR as follows:

$$XOR(AES(IV+Ctr)\,Ks, \text{ plaintext}).$$

Consequently performing both operations together, which is effectively what would be done within the session management server of an embodiment, amounts to performing:

$$XOR(AES(IV+Ctr)\,Ks, XOR(AES(IV+Ctr)\,Kg, \text{ ciphertext})).$$

Given the associative and commutative properties of XOR, the operations above may be reordered to optimise them in such a way that the expression becomes realisable on the client-side. Thus, the expression may be written as follows:

$$XOR(\text{ciphered text}, XOR(AES(IV+Ctr)\,Ks, AES(IV+Ctr)\,Kg)).$$

Since XOR(AES(IV+Ctr) $Ks$, AES(IV+Ctr) $Kg$) can be generated once per playback session, by the trans-scrambling code generator for example, the operation performed on the client-side amounts simply to performing an XOR of the encrypted stream (encrypted base samples) with the delivered buffers (session key, IV and Ctr). The delivered buffers include the session key and part of the trans-scrambling code. Thus, the decryption can be performed client-side without resorting to White-box cryptography. According to an embodiment, the delivered buffer sent from the session management server to the client device is a 16-byte buffer (IV, Ctr, session key), once per operation. Consequently, the number of such deliveries may be optimised by minimising the number of IVs used in the encrypted content.

A similar demonstration can be shown for the variants, where decrypting and re-encrypting of an even/odd variant can be expressed as:

$$\text{XOR(ciphered text, XOR(AES(IV+Ctr)}\, Ks, \text{AES(IV+Ctr)}\, Kve_i/Kvo_i)).$$

Since XOR(AES(IV+Ctr) $Ks$, AES(IV+Ctr) $Kve_i/Kvo_i$) can be generated once per chunk, by the trans-scrambling code generator for example, the operation performed on the client-side amounts simply to performing an XOR of the encrypted stream (encrypted sample variants) with the delivered buffers (session key, IV and Ctr). The delivered buffers include the session key and part of the trans-scrambling code. Thus, the decryption can be performed client-side without resorting to White-box cryptography.

The thus decrypted base samples and sample variants are then combined by the client device to provide content which may be rendered, thereby providing a secure method for delivering watermarked content to one or more trusted or non-trusted client devices.

**Claims**

1. A method for delivering a digital content to at least one client device having provided an identifiable request for the content, the content being traceable to the identifiable request, the method comprising:

   providing, to the client device, all or part of the content, in at least $i$ chunks encrypted under a global key ($Kg$);
   providing, to the client device, for each of the $i$ chunks, a selection, based on an identifier of the identifiable request, from either:

   a corresponding first variant of the chunk, comprising at least a first mark, encrypted under an $ith$ first variant encryption key ($Kve_i$); or
   a corresponding second variant of the chunk, comprising at least a second mark, encrypted under an $ith$ second variant encryption key ($Kvo_i$), different from the $ith$ first variant encryption key ($Kve_i$) the second mark being different from the first mark; and

   decrypting and combining, by the client device, the $i$ chunks and the $i$ selected variants, thereby reconstituting the content; **characterised in that** the method further comprises, in a session management server external to the client device:
   generating a trans-scrambling code to replicate:

   decrypting the encrypted $i$ chunks using the global key ($Kg$) followed by re-encrypting the decrypted $i$ chunks under a session key ($Ks$) corresponding to said identifier of the identifiable request; and
   decrypting the selected corresponding encrypted variants using the respective variant encryption key ($Kve_i$, $Kvo_i$) followed by re-encrypting the decrypted variants under the session key ($Ks$); and

   providing the trans-scrambling code and the session key ($Ks$) to the client device in order to perform said decrypting and combining for reconstituting the content.

2. The method according to claim 1, wherein the content is encrypted according to a block cipher mode of an advanced encryption standard using a global initialisation vector and a global counter value, the trans-scrambling code including, for a given identifiable request, the global initialisation vector and the global counter value, the client device decrypting the base chunks by decrypting the sum of the initialisation vector and the counter value using the session key ($Ks$) and executing an XOR of the decrypted sum and the encrypted base chunks.

3. The method according to claim 2, the block cipher mode of the advanced encryption standard using, for each ith variant, an ith variant initialisation vector and an ith variant counter value, the trans-scrambling code further including, for a given identifiable request, the corresponding variant initialisation vector and variant global counter value, the client device decrypting the respective variant chunk by decrypting the sum of said initialisation vector and counter value using the session key ($Ks$) and executing an XOR of the decrypted sum and the respective encrypted variant chunk.

4. The method according to any of the preceding claims, wherein the request is provided as part of a session initiated by the client device, the request being identifiable by a session identifier of said session.

5. The method according to claim 4, wherein the session identifier has a length of i bits.

6. A method for receiving a digital content subject to providing an identifiable request for the content, the content being traceable to the identifiable request, the method comprising:

receiving at least *i* chunks of the content encrypted under a global key ($Kg$);
receiving, for each of the *i* chunks, a selection, based on an identifier of the identifiable request, from either:

a corresponding first variant of the respective chunk, comprising at least a first mark, encrypted under an *ith* first variant encryption key ($Kve_i$); or
a corresponding second variant of the respective chunk, comprising at least a second mark, encrypted under an *ith* second variant encryption key $Kvo_i$, different from the *ith* first variant encryption key ($Kve_i$) the second mark being different from the first mark; and

decrypting and combining the *i* base chunks and selected variants, thereby
reconstituting the content;

**characterised in that** the method further comprises:

receiving a remotely generated a trans-scrambling code to replicate:

decrypting the encrypted *i* chunks using the global key ($Kg$) followed by re-encrypting the decrypted *i* chunks under a session key ($Ks$) corresponding to said identifier of the identifiable request; and
decrypting the selected corresponding encrypted variants using the respective variant encryption key ($Kve_i$, $Kvo_i$) followed by re-encrypting the decrypted variants under the session key ($Ks$); and

performing said decryption using the session key ($Ks$) and combining the decrypted base samples and sample variants to reconstitute the content.

7. A system for delivering digital content to at least one client device having provided an identifiable request, the content being traceable to the identifiable request, the system comprising:

a content server at least for pre-marking the content;
a content delivery network on which to provide a set of at least i chunks of the content encrypted under a global key; and a corresponding set of first variants of the chunks pre-marked using a first marker, each encrypted under one from i first variant keys ($Kve_i$); and a corresponding set of second variants of the chunks pre-marked using a second marker, each encrypted under one from i second variant keys ($Kvo_i$); the client device configured to provide the identifiable request and to recover from the content delivery network, the i encrypted chunks and a selection of corresponding encrypted first variants or encrypted second variants, depending on an identifier of the identifiable request;

**characterised in that**:

the system further comprises a session management server, remote from the client device, the session management server comprising a trans-scrambling code generator to generate a code to replicate:

decrypting the encrypted *i* chunks using the global key ($Kg$) followed by re-encrypting the decrypted *i* chunks under a session key ($Ks$) corresponding to said identifier of the identifiable request; and
decrypting the selected corresponding encrypted variants using the respective variant encryption key ($Kve_i$, $Kvo_i$) followed by re-encrypting the decrypted variants under the session key ($Ks$);

the client device being further configured to receive the session key a ($Ks$) and the trans-scrambling code from the session management server and to apply the trans-scrambling code to the i chunks and their corresponding variants and to decrypt the result using the session key ($Ks$) to get the chunks and variants; and to combine the chunks and their corresponding variants to get the content.

SERVER SIDE          CLIENT SIDE

$CT_{CLIENT1}$          CLIENT1

$CT_{CLIENT2}$          CLIENT2

SERVER
PROC
CT

OTT CDN

$CT_{CLIENT3}$          CLIENT3

**Figure 1**

ID

$VAR_{EVEN}$

MK0 → $Ke_0, Ke_1, Ke_2...$

CT → ENCODE → $CH_{0,1,2...}$

BASE → Kg

MK1 → $Ko_0, Ko_1, Ko_2...$

$VAR_{ODD}$

COMB → $CT_{ID}$

**Figure 2**

Figure 3

Figure 4

Europäisches
Patentamt

European
Patent Office

Office européen
des brevets

# EUROPEAN SEARCH REPORT

Application Number

EP 17 19 5094

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2009/028327 A1 (PINDER HOWARD G [US]) 29 January 2009 (2009-01-29) * paragraphs [0038], [0045], [0049] - [0052], [0058], [0067], [0071] - [0077], [0080] * ----- | 1-7 | INV. H04N1/32 H04N21/2343 H04N21/643 H04N21/8358 G06F21/16 H04N21/254 H04N21/258 H04N21/4627 H04N7/167 H04N21/2389 H04N21/4405 H04N21/4408 |
| Y | EP 3 113 501 A1 (NAGRAVISION SA [CH]) 4 January 2017 (2017-01-04) * paragraphs [0022], [0023], [0031], [0038] * ----- | 1,4-7 | |
| Y | US 2007/110237 A1 (TEHRANCHI BABAK [US] ET AL) 17 May 2007 (2007-05-17) * paragraphs [0007], [0048] - [0060] * ----- | 2,3 | |
| A | WO 2008/013562 A1 (THOMSON LICENSING [FR]; BLOOM JEFFREY ADAM [US]; RAMASWAMY KUMAR [US]) 31 January 2008 (2008-01-31) * page 5, line 1 - page 6, line 16 * ----- | 1,6,7 | |
| A | US 2003/005285 A1 (GRAUNKE GARY L [US]) 2 January 2003 (2003-01-02) * paragraph [0029] * ----- | 1,6,7 | TECHNICAL FIELDS SEARCHED (IPC) H04N G06F |
| A | WO 2017/067845 A1 (NAGRAVISION SA [CH]) 27 April 2017 (2017-04-27) * paragraphs [0038] - [0044] * ----- | 1-7 | |
| A | US 2002/150239 A1 (CARNY OFIR [IL] ET AL) 17 October 2002 (2002-10-17) * paragraphs [0006], [0008] * ----- | 1-7 | |
| A | WO 2010/019605 A1 (TIVO INC [US]; PLATT DAVID C [US]) 18 February 2010 (2010-02-18) * paragraphs [0013], [0029], [0031] * ----- | 1-7 | |

The present search report has been drawn up for all claims

| Place of search | Date of completion of the search | Examiner |
|---|---|---|
| Berlin | 9 April 2018 | Materne, Alain |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 3 468 164 A1**

## ANNEX TO THE EUROPEAN SEARCH REPORT
## ON EUROPEAN PATENT APPLICATION NO.

EP 17 19 5094

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2018

| Patent document cited in search report | | Publication date | Patent family member(s) | | Publication date |
|---|---|---|---|---|---|
| US 2009028327 | A1 | 29-01-2009 | CN 101889440 A<br>EP 2172017 A1<br>US 2009028327 A1<br>WO 2009018006 A1 | | 17-11-2010<br>07-04-2010<br>29-01-2009<br>05-02-2009 |
| EP 3113501 | A1 | 04-01-2017 | EP 3113501 A1<br>WO 2017001467 A1 | | 04-01-2017<br>05-01-2017 |
| US 2007110237 | A1 | 17-05-2007 | US 2007110237 A1<br>US 2015016663 A1 | | 17-05-2007<br>15-01-2015 |
| WO 2008013562 | A1 | 31-01-2008 | BR PI0621945 A2<br>CN 101491078 A<br>EP 2044765 A1<br>JP 2009545229 A<br>KR 20090031747 A<br>US 2009290711 A1<br>WO 2008013562 A1 | | 18-10-2011<br>22-07-2009<br>08-04-2009<br>17-12-2009<br>27-03-2009<br>26-11-2009<br>31-01-2008 |
| US 2003005285 | A1 | 02-01-2003 | NONE | | |
| WO 2017067845 | A1 | 27-04-2017 | US 2017118537 A1<br>WO 2017067845 A1 | | 27-04-2017<br>27-04-2017 |
| US 2002150239 | A1 | 17-10-2002 | NONE | | |
| WO 2010019605 | A1 | 18-02-2010 | AU 2009282075 A1<br>CA 2732625 A1<br>CN 102177498 A<br>EP 2316067 A1<br>EP 3220308 A1<br>HK 1158785 A1<br>JP 5797291 B2<br>JP 2012500519 A<br>JP 2014131322 A<br>US 2010042833 A1<br>WO 2010019605 A1 | | 18-02-2010<br>18-02-2010<br>07-09-2011<br>04-05-2011<br>20-09-2017<br>21-10-2016<br>21-10-2015<br>05-01-2012<br>10-07-2014<br>18-02-2010<br>18-02-2010 |

EPO FORM P0459

For more details about this annex : see Official Journal of the European Patent Office, No. 12/82